# FASCICULE DE BREVET EUROPEEN

(11) **EP 1 086 551 B1**
(45) Date de publication et mention de la délivrance du brevet: **11.08.2010**
(21) Numéro de dépôt: 99923701.9
(22) Date de dépôt: 08.06.1999
(51) Int. Cl.: H04L 12/28, H04L 29/06

(54) **PROCEDE DE GESTION DE PRIORITES D'ACCES A DES RESSOURCES DANS UN RESEAU DOMESTIQUE ET APPAREIL DE MISE EN OEUVRE**
VERFAHREN UND VORRICHTUNG ZUR RESSOURCENZUGRIFFSVERWALTUNG IN EINEM HAUSNETZWERK
DOMESTIC SYSTEM RESOURCE ACCESS PRIORITY MANAGEMENT METHOD AND DEVICE FOR THE IMPLEMENTATION THEREOF

(30) Priorité: 08.06.1998 FR 9807186
(43) Date de publication de la demande: 28.03.2001
(73) Titulaire: THOMSON multimedia, 92100 Boulogne Billancourt (FR)
(72) Inventeur: COEZ, Fabienne, Thomson Multimedia, 92648 Boulogne Cedex (FR); FANNECHERE, Nicolas, Thomson Multimedia, 92648 Boulogne Cedex (FR)
(74) Mandataire: Kohrs, Martin
(86) Numéro de dépôt international: PCT/FR1999/001358
(87) Numéro de publication internationale: WO 1999/065190

(56) Documents cités:
- EP-A- 0 535 749
- WO-A-98/17033
- US-A- 5 553 239

## Description

L'invention concerne la gestion de priorités d'accès par des applications à des ressources dans un réseau de communication domestique, ainsi qu'un appareil pour la mise en oeuvre du procédé.

Dans un réseau domestique, un certain nombre d'appareils sont reliés par un réseau de communication et communiquent par l'intermédiaire d'un langage commun. De tels réseaux évoluent vers la transmission de données audio et vidéo, et peuvent par exemple être basés sur un bus série de type IEEE 1394. Les appareils connectés au réseau peuvent posséder des 'ressources', c'est à dire des fonctionnalités particulières. Un téléviseur possède par exemple un tuner, un écran cathodique, tandis qu'un magnétoscope possède un tuner et une fonctionnalité d'enregistrement. Les ressources d'un appareil pouvant être mises à la disposition des autres appareils du réseau (par exemple un magnétoscope effectue l'enregistrement d'une émission en contrôlant le tuner du téléviseur), des conflits d'accès aux ressources peuvent apparaître, une ressource pouvant recevoir des commandes contradictoires de la part de diverses applications.

L'art antérieur connaît, par la demande de brevet PCT WO 98/17033, un réseau d'appareils comportant des moyens de gestion de conflit d'accès des appareils à des ressources.

Dans le cadre de la solution technique décrite dans ce document de l'art antérieur, lorsqu'une ressource est verrouillée (« *locked* »), il lui est associé un certain nombre de paramètres. Le paramètre intitulé « persistance » peut prendre trois valeurs et détermine si un autre appareil peut réussir à déverrouiller l'accès à la ressource.

L'invention a pour but de proposer une gestion des priorités d'accès.

L'invention a pour objet un procédé de gestion de priorités d'accès d'applications à des ressources d'appareils reliés par un réseau de communication, selon la revendication 1.

Les revendications dépendantes spécifient des variantes de réalisation.

Il est à noter que les caractéristiques ci dessus relevant des notions de niveau d'accès primaire et secondaire, ainsi que les caractéristiques supplémentaires relatives à ces notions décrites dans ce qui suit pourront ultérieurement faire l'objet d'un jeu indépendant de revendications.

D'autres caractéristiques et avantages de l'invention apparaîtront à travers la description d'un exemple de réalisation non limitatif illustré par les figures jointes parmi lesquelles
- la figure 1 est un diagramme bloc d'un réseau d'appareils mettant en oeuvre le procédé conforme à l'invention,
- la figure 2 est un schéma représentant l'organisation logique d'un appareil de la figure 1.

Sur les différentes figures, les mêmes éléments portent des références identiques.

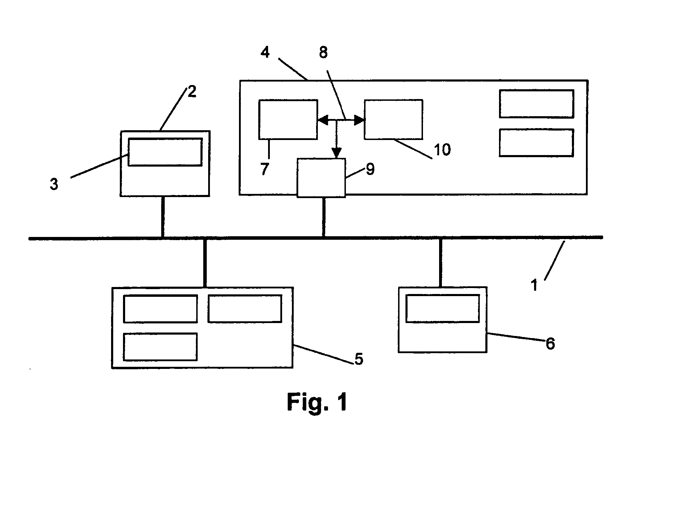

Le réseau de la figure 1 est constitué dans le présent exemple de réalisation d'un bus série conforme au standard IEEE 1394 -1995. Ce bus, référencé 1, relie des appareils 2, 4, 5 et 6. On entend par 'appareil' un ensemble physiquement distinct relié au réseau. Chaque appareil peut comporter un ou plusieurs sous-appareils, tels que le sous-appareil 3. Ces sous-appareils peuvent être des ressources, qui sont des fonctionnalités d'appareils. Les ressources forment des modules logiciels ('software elements' en langue anglaise) au sens du document 'HAVi' mentionné plus loin.

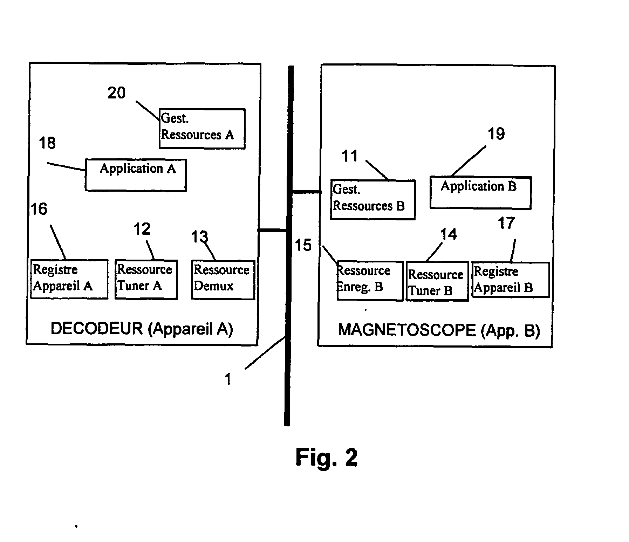

A titre d'exemple (voir figure 2), un appareil A est un décodeur de télévision numérique, tandis qu'un autre appareil, l'appareil B, est un magnétoscope. Le décodeur A possède deux ressources, à savoir un tuner 12 et un démultiplexeur 13. Le magnétoscope B possède également deux ressources : un tuner 14 et la fonctionnalité d'enregistrement 15. Chacun des appareils A et B comporte une application (respectivement 18 et 19) qui est une interface utilisateur graphique, qui permet à un utilisateur de gérer directement les fonctionnalités de chaque appareil. L'interface utilisateur de l'appareil A permet selon le présent exemple de réalisation de gérer l'enregistrement, par un autre appareil du réseau, de programmes issus du démultiplexeur 13. Une ressource peut être résidente, c'est à dire présente dès l'origine dans un appareil, mais peut également être téléchargée.

Pour la mise en oeuvre des fonctionnalités et protocoles liés à HAVi, chaque appareil possède des moyens de traitement d'information, de mémoire et de connexion appropriés. Les moyens de traitement peuvent comprendre un microprocesseur 7 ou un microcontrôleur ou équivalent associés à divers circuits spécialisés pour des tâches plus spécifiques (correction d'erreur, traitement du signal, démodulation etc...). Les moyens de mémoire (10) peuvent être des mémoires statiques fixes ou reprogrammables pour contenir le noyau logiciel et/ou des parties de code téléchargées et/ou des données. Les moyens de mémoire peuvent aussi comporter des dispositifs de stockage amovibles tels des cartes à microprocesseur et des cartes de type PCMCIA, ainsi que des disques durs ou autres moyens de stockage. Les moyens de connexion comportent entre autres l'interface au bus IEEE 1394, référencé 9 sur la figure 1. Il est bien évident que l'invention ne se limite pas à une implémentation structurelle particulière. Selon la présente description, les divers éléments d'un appareil sont reliés grâce à un bus interne 8. Les sous-appareils communiquent bien évidemment également avec le bus interne, mais ont été illustrés de manière séparée, car ces sous-appareils peuvent être des applications logicielles exécutées par le microprocesseur 7, aussi bien que des parties matérielles séparées du microprocesseur.

Chaque appareil comporte également un registre (respectivement référencé 16, 17 pour chacun des appareils A et B). Le registre fait l'objet d'une demande de brevet français au nom de la demanderesse, déposée le 23 avril 1998 et portant le numéro 9805110. Une autre de demande de brevet concernant le sujet de la présente demande est la demande de brevet français 9807187, déposée à la date de priorité de la présente demande. Cette autre demande concerne la programmation d'actions de ressources dans un réseau de communication.

D'autres aspects relatifs à la présente invention sont par ailleurs décrits dans le document 'The HAVi Architecture - Specification of the Home Audio/Video interoperability (HAVi) Architecture' en date du 11 mai 1998 en sa version 0.8 et mis à disposition du public depuis le 15 mai 1998. Une version 1.0 de ce document est désormais disponible. On se référera également à ces documents pour de plus amples renseignements sur les divers éléments du réseau, la présente description se limitant aux éléments nécessaires pour l'explication de l'invention.

Le registre d'un appareil (aussi appelé 'registre local' pour cet appareil, par opposition à des 'registres distants' résidant dans d'autres appareils) participe à la gestion de l'ensemble des ressources de cet appareil. Pour cet effet, le registre comporte une table dans laquelle viennent s'enregistrer les autres ressources de l'appareil, en indiquant leurs attributs (type de la ressource, identificateur de la ressource dans le réseau, ...). Lorsqu'un module logiciel doit communiquer avec un autre module logiciel local, il peut obtenir la liste de ces modules par l'intermédiaire du registre local, qui possède une adresse locale connue. Lorsqu'un module logiciel doit communiquer avec un module logiciel distant d'un autre appareil, il peut obtenir l'adresse ('SEID') du module logiciel distant en passant par le registre local. Un module logiciel peut déterminer une liste de modules correspondant à certains critères de recherche, indépendamment de la localisation de ces modules, en transmettant une requête au registre local qui propage cette requête aux registres distants. La requête comporte sous forme de paramètres les critères de sélection des modules logiciels recherchés, par exemple le type de module (afficheur, enregistreur, ...).

A ce titre, les ressources d'un appareil s'enregistrent également au niveau du registre local, au même titre que les autres modules logiciels. Un module téléchargé s'enregistre auprès du registre de l'appareil qui fait office de plate-forme d'exécution de ce module.

Le registre est un module qui est selon le présent exemple de réalisation, un programme stocké dans la mémoire 10 et mis en oeuvre par le microprocesseur 7 d'un appareil.

Une application peut être de l'un des deux profils suivants : Utilisateur ou Machine. Le profil Utilisateur correspond à une application qui est apte à interagir directement avec l'utilisateur, comme par exemple l'interface utilisateur graphique 18 de l'appareil A. Le profil Machine correspond à une application qui n'est pas contrôlée directement par un utilisateur, mais qui met par exemple en oeuvre une action programmée. Une application peut contrôler une ressource. Une application peut également être une ressource et à ce titre être contrôlée par une autre application. Selon le présent exemple de réalisation, une application de profil Utilisateur aura une prépondérance sur une application de profil Machine lorsqu'il s'agira de résoudre un conflit de réservation d'une ressource. On dira que le profil Utilisateur possède un niveau de priorité plus élevé que le profil Machine.

Une ressource possède un certain nombre de propriétés :
Une ressource peut être de nature dite statique ou dynamique. Une ressource dynamique peut être divisée en plusieurs parties indépendantes, moyennant la spécification de paramètres adéquats. Typiquement, la bande passante est une ressource dynamique: une application réservant une bande passante devra spécifier la largeur de bande à réserver. Une ressource de nature statique est une ressource ne pouvant être réservée de cette manière.
Une ressource dynamique possédera un état de réservation qui correspond à la quantité restante disponible.
Une ressource statique peut être dans un parmi trois états de réservation, un état dit disponible, un état dit partagé, et un état dit verrouillé. Dans l'état disponible, la ressource n'est contrôlée par aucune application. Dans l'état partagé, la ressource est contrôlée par au moins une application, mais d'autres applications peuvent néanmoins utiliser la ressource, avec certaines restrictions concernant les commandes de contrôle admises pour ces autres applications. Dans l'état verrouillé, la ressource est contrôlée par au moins une application et rejettera toute commande de contrôle en provenance d'une autre application.

D'autre part, on associera à chaque ressource un descripteur, c'est à dire une structure de données ou encore enregistrement, comportant des valeurs de variables identifiant les fonctionnalités de la ressource, ainsi qu'une adresse dans le réseau. Comme déjà mentionné, ce descripteur est enregistré au niveau du registre local.

Selon le présent exemple de réalisation, le descripteur de ressource indique le domaine d'activité de la ressource (par exemple audio/video, chauffage, appareils ménagers, ...), le type de la ressource, qui indique sa fonction (syntoniseur, décodeur, modem, ...), le niveau d'accessibilité (ressource 'locale', accessible uniquement par des applications résidant dans le même appareil, ou ressource 'publique', accessible également par des applications exécutées sur des plates-formes autres que l'appareil dans lequel réside l'application publique).

La gestion des ressources est basée sur un mécanisme de réservation. Une réservation est nécessaire pour la mise en oeuvre de commandes de contrôle et plus généralement pour tout accès en écriture changeant l'état d'une ressource. Une réservation n'est généralement pas nécessaire pour un accès en lecture. Une fois une réservation acceptée, l'application devient une application cliente de la ressource: elle en a le contrôle, mais elle n'est pas nécessairement la seule application à être dans ce cas, d'où la nécessité d'un mécanisme de résolution de conflits d'accès à la ressource.

Chaque appareil dispose d'un module logiciel appelé 'gestionnaire des ressources'. Dans le réseau de la figure 2, les gestionnaires des ressources des appareils A et B sont référencés respectivement 20 et 11. Ces modules collaborent avec les registres. Les registres maintiennent localement une liste des modules logiciels (ressources, applications,...) disponibles, et le gestionnaire des ressources gère les réservations des ressources locales. Les informations maintenues par les registres sont relativement statiques, tandis que celles maintenues par les ressources sont généralement susceptibles d'évoluer rapidement.

Selon le présent exemple de réalisation, un gestionnaire de ressources obtient la liste des ressources locales, respectivement distantes, directement auprès du registre local, respectivement auprès du registre local après que celui-ci ait lancé une requête d'information aux registres distants. Les ressources non-résidentes sont ainsi facilement accessibles au gestionnaire de ressources. Par exemple, lorsqu'un module de contrôle de fonction ('FCM' selon terminologie HAVi) est déchargé à partir d'un appareil audio-vidéo de base ('BAV' selon la terminologie HAVi), ce module de contrôle s'enregistre auprès du registre local de l'appareil lui servant de plate-forme d'exécution, tel qu'un appareil audio-vidéo à fonctionnalités complètes ('FAV').

Les principes utilisés pour la réservation sont les suivants :
- avant de lancer une commande de contrôle d'une ressource, une application doit réserver cette ressource auprès du gestionnaire des ressources de l'appareil dans lequel réside la ressource, et
- une application doit libérer une ressource qu'elle n'utilise plus.

Selon le présent exemple de réalisation, une application souhaitant effectuer une réservation détermine l'adresse du gestionnaire des ressources de l'appareil dans lequel réside la ressource par l'intermédiaire du registre de l'appareil dans lequel réside l'application. Une fois l'adresse obtenue, l'application peut contacter le gestionnaire des ressources en vue de s'informer de l'état de la ressource. Par contre une fois la réservation obtenue, l'application ayant effectuée cette réservation obtient le contrôle de la ressource et adresse ses commandes de contrôle directement à la ressource. Le gestionnaire des ressources n'est contacté par la suite que pour indiquer que la ressource doit être libérée.

Chaque ressource maintient une structure de données dite 'structure de contention', qui contient les informations suivantes :

### (1) Informations statiques

Ce type d'information n'a à priori pas vocation à évoluer. Ces informations peuvent être demandées par le gestionnaire de ressources à partir des ressources.

### (a) Le mode de contrôle de la ressource

Le mode de contrôle peut être l'un des suivants: Transparent, Partageable, Exclusif.

### (b) Nombre maximum d'applications supportées

Ce champ est utilisé en cas de mode partageable ou exclusif. La ressource indique le nombre maximal d'applications supportées simultanément, le minimum étant 1.

### (2) Informations dynamiques

### (a) Informations relatives aux applications contrôlant la ressource

Parmi les données mémorisées relatives à chaque application, on trouvera :
- le profil de l'application (Utilisateur ou Machine),
- le cas échéant, s'il s'agit d'une application primaire ou secondaire (voir ci-dessous),
- des données dites privées, réservées à une utilisation non encore définie,
- un champ texte comportant un descriptif du motif de la réservation (par exemple 'Enregistrement de la Chaîne Z').

### (b) Etat actuel de la ressource: Disponible, Partagé, Verrouillé

### (c) Nombre d'applications contrôlant la ressource

### (d) Liste des applications contrôlant la ressource

### (e) Liste des applications en attente de pouvoir contrôler la ressource (par exemple parce que le nombre maximal d'applications pour cette ressource a été dépassé).

Les applications, comme les ressources, sont identifiées par une adresse définie dans le document HAVi et portant le nom 'SEID'.

De manière plus spécifique, la ressource maintient un minimum de données relatives aux applications qui la contrôlent, en vue de la mise en oeuvre des mécanismes de préemption et de négociation. Pour la mise en oeuvre du mécanisme de répartition en application primaire et applications secondaires, une ressource mémorise au moins l'identificateur de l'application primaire. On se référera à ce propos notamment à la table 1.

Dans le cas du mode de contrôle partageable, on indiquera également le type d'accès autorisé: Répartition des applications en application primaire et applications secondaires, ou égalité de traitement pour toutes les applications.

Dans le mode de contrôle Transparent, la ressource accepte un contrôle simultané sans restriction de la part de plusieurs applications, sans faire de distinction entre les applications.

Dans le mode Partageable, plusieurs applications peuvent contrôler en même temps la ressource, mais cette dernière mettra en oeuvre des procédés de résolution de conflit d'accès et de partage de ressource si les commandes des applications risquent de conduire à un fonctionnement incorrect.

Un exemple est celui du décodeur A de la figure 2. Le tuner de cet appareil est réglé pour la réception d'un signal en provenance d'un transpondeur particulier, correspondant à un certain flux multiplexé. Dans ce flux, le démultiplexeur a la capacité de repérer les paquets correspondant à un service ou à un autre, et d'extraire ces paquets vers les applications clientes. En supposant qu'un flux donné véhicule une dizaine de services, des applications distinctes peuvent utiliser la ressource démultiplexeur pour accéder à des services identiques ou différents. Le démultiplexeur fonctionne alors comme un serveur. Un conflit apparaît lorsqu'une application veut changer de transpondeur: ceci implique que toute autre application perdra l'accès aux services transmis sur le transpondeur actuel.

Selon l'invention, le procédé de résolution préféré d'un tel conflit est le suivant : les applications clientes d'une ressource sont classées en applications clientes primaires et secondaires. Une seule application peut être une application primaire pour une ressource : c'est dans un premier temps celle qui a réservé la ressource en premier. Toutes les autres applications sont des applications secondaires. La ressource accepte toutes les commandes en provenance de l'application primaire, mais peut n'accepter que certaines commandes, et ce de façon limitée, de la part des applications secondaires. Les commandes des applications secondaires ne sont prises en compte que dans la mesure où elles n'entrent pas en conflit avec les commandes de l'application primaire. Dans l'exemple du démultiplexeur donné plus haut, seule l'application primaire a la possibilité de changer de transpondeur. Les applications secondaires ont simplement le droit de choisir un service sur le transpondeur actuel.

Selon une variante de réalisation, l'application primaire informe son utilisateur final (par exemple le téléspectateur) des perturbations que son action peut entraîner. En reprenant l'exemple précédemment décrit, avant de permettre à un utilisateur de changer de transpondeur, l'application primaire requiert le cas échéant auprès de la ressource gérant le tuner en question la liste des applications secondaires, ainsi que la liste des motifs de réservation correspondants. Ces motifs sont affichés à destination de l'utilisateur, qui prendra ou non la décision de procéder au changement de transpondeur, en connaissance de cause des suites possibles de son action.

Selon le présent exemple de réalisation, les applications secondaires ont toutes des possibilités de commande identiques. On distingue deux procédés: selon le premier procédé, une application ne peut perturber les commandes précédemment transmises à la ressource par une autre application ('principe du respect mutuel'), tandis que selon le second procédé, une application peut perturber une autre application.

Dans tous les cas, ce qu'est une 'perturbation' d'une application secondaire par une autre dépend de la nature de la ressource contrôlée et c'est cette dernière qui devra trancher. Selon le présent exemple de réalisation, c'est le principe du respect mutuel qui est mis en oeuvre en ce qui concerne les conflits d'accès entre applications secondaires.

Selon une variante de réalisation, comme déjà mentionné en relation avec l'application primaire, une application secondaire avertit, s'il y a lieu, son utilisateur final des restrictions imposées à son action.

A titre d'exemple, la table 1 donne pour une ressource partageable une partie des informations mémorisées au niveau de chaque ressource :

**Table 1**

| Application | Profil | Accès | Dans queue d'attente |
|---|---|---|---|
| A1 | UTILISATEUR | Primaire | Non |
| A2 | MACHINE | Secondaire | Non |
| A3 | UTILISATEUR | Lecture | Oui |
| | | | |
| ... | | | |

Dans le mode Exclusif, la ressource ne pourra être contrôlée que par une seule application à un moment donné. La ressource mémorise au moins l'identité de cette application, ainsi que son niveau de priorité(type Utilisateur ou Machine selon le présent exemple de réalisation). A titre d'exemple, on prendra la commande des mécanismes d'un magnétoscope, comme l'appareil B de la figure 2. Un conflit peut apparaître si une application demande l'enregistrement d'une émission, tandis qu'une autre application demande un peu plus tard l'éjection du support d'enregistrement. Dans ce cas, la première application aura un contrôle exclusif.

Selon le type de ressource, le mode d'accès à une ressource peut différer pour différentes commandes. Par exemple, seules les commandes qui changent le mode de fonctionnement d'une ressource peuvent générer des conflits et justifier de ce fait un mode de contrôle exclusif ou partageable, tandis que toutes les autres commandes, par exemple des accès en lecture ou des demandes d'événements sont gérés selon le mode transparent.

Pour réserver une ressource, une application transmet une commande correspondante au gestionnaire des ressources local à la ressource ou au gestionnaire local à l'application elle-même. Cette commande comporte en tant que paramètres les informations relatives à l'application inscrites par la suite dans la structure de contention au niveau de la ressources. Aucune réservation n'est effectuée par une application pour une ressource en mode transparent. Selon le présent exemple, une réservation est effectuée pour l'obtention immédiate du contrôle d'une ressource, c'est à dire que la notion de temps n'est pas prise en compte dans le but de simplifier la présente description. Cependant, le principe est similaire pour des conflits d'accès d'une même ressource pour des périodes futures qui se chevauchent. La demande de brevet ayant même date de priorité que la présente demande concerne notamment ces réservations pour des périodes futures.

Selon l'état actuel de la ressource, trois cas peuvent se présenter :
- La réservation est acceptée et l'application devient l'application primaire ou une application secondaire. C'est le cas lorsque la ressource est initialement respectivement dans l'état disponible ou partageable.
- La réservation est rejetée car la ressource est verrouillée (par exemple parce que le nombre maximal d'applications a été atteint). L'application peut requérir, sous la forme d'un drapeau dans la commande de réservation, d'être placée dans la queue d'attente de cette ressource, et d'obtenir une notification de la part du gestionnaire des ressources lorsqu'il lui aura automatiquement attribué un nouveau niveau d'accès (soit un accès secondaire devenant primaire, soit une application dans la file d'attente devenant application secondaire ou primaire). L'adresse de l'application est alors mémorisée dans une pile de la structure de contention de la ressource appropriée.
- La mise en attente de l'application si son profil est tel qu'il lui permet de négocier le titre d'application primaire avec l'application primaire actuelle. Le mécanisme de négociation ou de préemption est, selon le présent exemple, mis en oeuvre par l'intermédiaire du gestionnaire des ressources.

Le gestionnaire des ressources transmet en retour vers l'application le résultat de la réservation. Si la réservation est acceptée, le message comporte également l'information selon laquelle l'application est primaire ou secondaire.

Lorsque l'application a obtenu le contrôle de la ressource et a terminé son action, elle transmet une commande de libération de la ressource au gestionnaire des ressources. Ce dernier efface alors l'application et les informations s'y rapportant de la structure de contention appropriée.

C'est également le cas pour une application en attente n'ayant plus besoin d'une ressource pour laquelle elle a tenté d'effectuer une réservation dans le passé, elle doit libérer la ressource.

Selon le présent exemple de réalisation, deux mécanismes sont prévus pour effectuer le remplacement d'une application primaire par une autre application : la préemption et la négociation. Le type de mécanisme est identifié dans la commande de réservation envoyée par une application au gestionnaire des ressources. La phase de préemption peut être précédée d'une phase de négociation.

Lorsqu'une application souhaite négocier le statut d'application primaire avec l'actuelle application primaire, elle envoie un message en ce sens au gestionnaire des ressources, qui à son tour transmet un message à l'application primaire. Celle-ci peut soit accepter, soit refuser de céder sa place. Une application de type Utilisateur peut par exemple transmettre la demande à l'utilisateur lui-même.

Une application peut également mettre en oeuvre le mécanisme de préemption pour s'approprier le statut d'application primaire. Dans ce cas, le gestionnaire des ressources vérifie que cette application a bien la priorité pour faire cette requête, par rapport à la priorité de l'application primaire actuelle. S'il autorise la préemption, le gestionnaire des ressources envoie une commande de transfert, que l'application primaire a l'obligation d'accepter. Un temps donné est alors accordé à l'application primaire pour libérer la ressource. Si ce temps n'est pas respecté, le gestionnaire des ressources effectue le transfert d'office de la ressource.

En liaison avec le mécanisme de répartition des applications clientes en application primaire et applications secondaires, la résolution des conflits pour la position d'application primaire lors de la réservation répond aux règles suivantes, sachant que l'on se place dans le cas où seuls les profils Utilisateur et Machine existeraient :
(1) Une application de profil Utilisateur a toujours priorité sur une application de profil Machine.
(2) La première application réservant une ressource partageable devient l'application primaire. Une application primaire peut interférer avec les commandes d'applications secondaires. Une application secondaire ne peut interférer avec une commande de l'application primaire.
(3) Une application de profil Utilisateur n'est jamais soumise au droit de préemption d'une autre application (Utilisateur ou Machine) sans phase de négociation.
(4) Quand une application primaire libère une ressource, c'est l'application secondaire ayant le niveau de priorité le plus élevé qui devient application primaire. Dans le cas où plusieurs applications secondaires possèdent ce niveau de priorité, c'est l'application la plus ancienne qui devient application primaire. Une application en attente prend alors la place de l'application secondaire.

Quatre cas de conflit peuvent se présenter, selon le profil de l'application primaire et celui de l'application cherchant à effectuer une réservation (on supposera ici qu'il y a négociation chaque fois que l'application primaire est de profil Utilisateur) :
(a) L'application primaire a un profil Utilisateur et l'application requérant la réservation a un profil Machine :
   Dans ce cas, la ressource transmet un message à l'application Utilisateur pour vérifier si ce dernier peut céder la main. C'est la négociation. Si c'est le cas, l'application de profil Machine devient l'application primaire. Sinon, l'application Machine abandonne sa tentative.

Un exemple correspondant à ce cas est celui d'un téléspectateur regardant un service diffusé sur un transpondeur A, tandis qu'un magnétoscope préprogrammé doit enregistrer un service sur un transpondeur B, utilisant le même tuner.
(b) L'application primaire a un profil Machine et l'application requérant la réservation a un profil Utilisateur :
   Avant de remplacer l'application primaire Machine par l'application Utilisateur, le gestionnaire des ressources informe l'application Utilisateur des conséquences potentielles de ce remplacement et lui demande une confirmation du remplacement, en lui donnant la possibilité de laisser l'application primaire finir sa tâche.

Un exemple correspondant à ce cas est celui où un magnétoscope enregistre un service d'un transpondeur A, tandis qu'un téléspectateur souhaite regarder un service sur un transpondeur B, utilisant le même tuner. Le téléspectateur est alors averti que l'enregistrement en cours devra être arrêté s'il confirme sa décision.
(c) L'application primaire a un profil Utilisateur et l'application requérant la réservation a également un profil Utilisateur :
   Dans ce cas, l'application primaire décidera de garder ou d'abandonner son niveau primaire: le principe est le même que dans le cas (a): il y a négociation.

Un exemple correspondant à ce cas est celui où un premier téléspectateur regarde un service sur un premier transpondeur (dont il a le contrôle par l'intermédiaire d'une application primaire), tandis qu'un second téléspectateur souhaite regarder un autre service d'un autre transpondeur, en utilisant le même tuner. Le second téléspectateur ne pourra régler le tuner sur la fréquence du nouveau transpondeur qu'avec l'accord du premier téléspectateur.
(d) L'application primaire a un profil Machine et l'application requérant la réservation a un également un profil Machine :
   Etant donné que selon le présent exemple, toutes les applications de profil Machine ont la même priorité, l'application primaire termine sa tâche sans être remplacée.

Selon une variante de réalisation, d'autres profils d'applications sont prévus: Arrière plan, Installation, Sécurité et Système, correspondant respectivement à des applications de faible priorité occupées à des tâches de fond (par exemple nettoyage de données obsolètes), des applications utilisées pendant l'installation et la configuration du réseau, des applications informant l'utilisateur de certains événements importants (alarmes de sécurité par exemple), et des applications système (par exemple les registres et les gestionnaires de ressources). Quand plus de deux profils existent, le comportement du système est décrit de façon générale par la table 2. Dans la variante de réalisation comportant plus de deux profils mentionnée ci-dessus, les profils Sécurité et Système ont à titre d'exemple des niveaux de priorité plus élevés que le profil Utilisateur. Il n'y a jamais de préemption d'une application de profil utilisateur par une application de niveau de priorité identique ou inférieur sans phase de négociation. Cependant, selon l'exemple décrit par la table 2, il n'y a pas de négociation lorsque l'application primaire a un profil Utilisateur, mais que l'application cherchant à obtenir le contrôle possède un niveau de priorité strictement supérieur.

**Table 2**

| **Profil/Priorité de l'application primaire** | **Priorité de l'application requérant la réservation** | **Mécanisme lancé par le gestionnaire des ressources** | **Nouvelle application primaire** |
|---|---|---|---|
| Utilisateur | Priorité supérieure | Préemption | Application requérant réservation |
| Utilisateur | Priorité identique ou inférieure | Négociation | Application primaire actuelle ou Application requérant réservation |
| Priorité différente d'Utilisateur | Priorité supérieure | Préemption | Application requérant réservation |
| Priorité différente d'Utilisateur | Priorité identique ou inférieure | Requête rejetée ou mise en attente | Application primaire actuelle |

## Revendications

1. Procédé de gestion de priorités d'accès d'applications à des ressources (12-17) d'appareils reliés par un réseau de communication (1), comportant les étapes :
- d'attribution, à chaque application (18, 19), d'un niveau de priorité d'accès aux ressources (12-17) du réseau, lesdits niveaux comprenant au moins les niveaux suivants :
(a) un premier niveau de priorité d'accès pour une première application qui n'est pas sous contrôle direct d'un utilisateur,
(b) un second niveau de priorité d'accès pour une seconde application apte à être commandée directement par un utilisateur,
- d'autorisation de préemption par la première application d'un accès à une ressource obtenu au préalable par la seconde application, en fonction des priorités d'accès respectives des première et seconde applications ;
- l'étape de préemption étant précédée d'une phase de négociation pendant laquelle la première application transmet un message à la seconde application lui demandant d'accepter ou de refuser d'abandonner l'accès au profit de la première application ;
- ledit procédé étant en outre **caractérisé en ce qu'**il comporte une étape consistant à demander l'autorisation d'un utilisateur pour l'abandon de la ressource par la seconde application pendant la phase de négociation.

2. Procédé selon la revendication 1, **caractérisé en ce qu'**une ressource admet simultanément des accès par au moins N applications, N étant supérieur ou égal à 1.

3. Procédé selon la revendication 1 ou 2, **caractérisé en ce qu'**une phase de préemption d'une application ayant le second niveau de priorité par une application ayant le premier niveau de priorité est toujours précédée d'une phase de négociation.

4. Procédé selon la revendication 1, 2 ou 3, **caractérisé en ce qu'**une phase de préemption d'une application ayant le second niveau de priorité par une application ayant le second niveau de priorité est toujours précédée d'une phase de négociation.

5. Procédé selon la revendication 1, **caractérisé en ce qu'**il est prévu au moins trois niveaux de priorité, le troisième niveau de priorité étant plus élevé que le second niveau de priorité, ce dernier étant plus élevé que le premier niveau de priorité, et **en ce qu'**il y a une phase de négociation si le niveau de priorité de la première application est identique ou inférieur au niveau de priorité de la seconde application.

6. Procédé selon l'une des revendications 1 à 5, **caractérisé en ce qu'**il y a directement préemption sans négociation si le niveau de priorité de la première application est supérieur au niveau de priorité de la seconde application.

7. Procédé selon l'une des revendications 1 à 6, **caractérisé en ce qu'**une application effectuant une tentative de réservation d'un accès d'une ressource déjà réservée par N applications est mise dans une file d'attente, en attendant la libération de la ressource par l'une des N applications.

8. Procédé selon la revendication 7, **caractérisé en ce que** la mise en attente d'une application dans une file d'attente n'est effectuée que si cela est spécifié par cette application dans sa requête d'accès.

9. Procédé selon l'une des revendications précédentes, **caractérisé en ce qu'**il comporte les étapes:
- d'attribution d'un niveau primaire de droits d'accès, pour une ressource donnée, à une application ayant requis en premier un accès à cette ressource;
- d'attribution d'un niveau secondaire de droits d'accès à d'autres applications effectuant une réservation de ladite ressource, les droits d'accès du niveau secondaire étant tels qu'ils n'interfèrent pas avec les droits d'accès du niveau primaire.

10. Procédé selon la revendication 9, **caractérisé en ce que** la préemption et le cas échéant la négociation n'est autorisée que pour forcer l'abandon d'un accès tenu par une application ayant un niveau d'accès primaire.

## Claims

1. Method for managing priorities of access of applications to resources (12 - 17) of devices linked by a communication network (1), comprising the steps:
- of allocating, to each application (18, 19), a level of priority of access to the resources (12 - 17) of the network, the said levels comprising at least the following levels:
(a) a first access priority level for a first application which is not under the direct control of a user,
(b) a second access priority level for a second application which can be commanded directly by a user,
- of authorizing preemption by the first application of access to a resource, which access was previously obtained by a second application, depending on the respective access priorities of the first and second applications ;
- the preemption step being preceded by a negotiation phase during which the first application transmits a message to the second application asking it to agree to or to refuse to abandon the access in favour of the first application ;
- said method being further **characterized in that** it comprises a step consisting in asking the authorization of a user to abandon the resource by the second application during the negotiation phase.

2. Method according to Claim 1, **characterized in that** a resource simultaneously allows accesses by at least N applications, N being greater than or equal to 1.

3. Method according to Claim 1 or 2, **characterized in that** a phase of preemption of an application having the second priority level by an application having the first priority level is always preceded by a negotiation phase.

4. Method according to Claim 1, 2 or 3, **characterized in that** a phase of preemption of an application having the second priority level by an application having the second priority level is always preceded by a negotiation phase.

5. Method according to Claim 1, **characterized in that** there are provided at least three priority levels, the third priority level being higher than the second priority level, the latter being higher than the first priority level, and **in that** there is a negotiation phase if the priority level of the first application is identical to or lower than the priority level of the second application.

6. Method according to one of Claims 1 to 5, **characterized in that** there is preemption directly without negotiation if the priority level of the first application is higher than the priority level of the second application.

7. Method according to one of Claims 1 to 6, **characterized in that** an application making an attempt to reserve access for a resource already reserved by N applications is placed in a queue, standing by for the freeing of the resource by one of the N applications.

8. Method according to Claim 7, **characterized in that** an application is placed on standby in a queue only if this is specified by this application in its access request.

9. Method according to one of the preceding claims, **characterized in that** it furthermore includes the steps:
- of allocating a primary level of access rights, for a given resource, to an application having requested access to this resource first,
- of allocating a secondary level of access rights to other applications reserving the said resource, the access rights of the secondary level being such that they do not interfere with the access rights of the primary level.

10. Method according to Claim 9, **characterized in that** the preemption and, as appropriate negotiation, is authorized only so as to force abandonment of an access held by an application having a primary access level.

## Patentansprüche

1. Verfahren für die Verwaltung von Prioritäten von Zugriffen von Anwendungen auf Ressourcen (12-17) von Geräten, die durch ein Kommunikationsnetzwerk (1) verbunden sind, welches folgende Schritte umfasst :
- jeder Anwendung (18, 19) wird ein Prioritätsniveau für den Zugriff auf die Ressourcen (12-17) des Netzwerks zugewiesen, wobei die Niveaus mindestens die folgenden Niveaus umfassen:
(a) ein erstes Zugriffsprioritätsniveau für eine erste Anwendung, die nicht der direkten Kontrolle eines Benutzers unterliegt,
(b) ein zweites Zugriffsprioritätsniveau für eine zweite Anwendung, die geeignet ist, von einem Benutzer direkt gesteuert zu werden,
- eine Preemption wird durch die erste Anwendung für einen Zugriff auf eine Ressource zugelassen, welcher vorhergehend von der zweiten Anwendung erhalten wurde, in Abhängigkeit von den jeweiligen Zugriffsprioritäten der ersten und der zweiten Anwendung,
- wobei dem Schritt der Preemption eine Verhandlungsphase vorangeht, während deren die erste Anwendung eine Nachricht an die zweite Anwendung übermittelt mit der Bitte, das Aufgeben des Zugriffs zugunsten der ersten Anwendung zu akzeptieren oder abzulehnen;
- wobei das Verfahren ferner **dadurch gekennzeichnet ist, dass** es einen Schritt umfasst, welcher darin besteht, während der Verhandlungsphase hinsichtlich des Aufgebens der Ressource durch die zweite Anwendung die Genehmigung eines Benutzers anzufordern.

2. Verfahren nach Anspruch 1, **dadurch gekennzeichnet, dass** eine Ressource Zugriffe durch mindestens N Anwendungen gleichzeitig zulässt, wobei N größer als oder gleich 1 ist.

3. Verfahren nach Anspruch 1 oder 2, **dadurch gekennzeichnet, dass** einer Phase der Preemption einer Anwendung mit dem zweiten Prioritätsniveau durch eine Anwendung mit dem ersten Prioritätsniveau immer eine Verhandlungsphase vorangeht.

4. Verfahren nach Anspruch 1, 2 oder 3, **dadurch gekennzeichnet, dass** einer Phase der Preemption einer Anwendung mit dem zweiten Prioritätsniveau durch eine Anwendung mit dem zweiten Prioritätsniveau immer eine Verhandlungsphase vorangeht.

5. Verfahren nach Anspruch 1, **dadurch gekennzeichnet, dass** mindestens drei Prioritätsniveaus vorgesehen sind, wobei das dritte Prioritätsniveau höher ist als das zweite Prioritätsniveau, wobei dieses höher ist als das erste Prioritätsniveau, und dass es eine Verhandlungsphase gibt, wenn das Prioritätsniveau der ersten Anwendung gleich dem Prioritätsniveau der zweiten Anwendung oder geringer als dieses ist.

6. Verfahren nach einem der Ansprüche 1 bis 5, **dadurch gekennzeichnet, dass** eine Preemption direkt ohne Verhandlung erfolgt, wenn das Prioritätsniveau der ersten Anwendung höher ist als das Prioritätsniveau der zweiten Anwendung.

7. Verfahren nach einem der Ansprüche 1 bis 6, **dadurch gekennzeichnet, dass** eine Anwendung, die einen Versuch durchführt, einen Zugriff auf eine bereits durch N Anwendungen reservierte Ressource zu reservieren, in eine Warteschlange bis zur Freigabe der Ressource durch eine der N Anwendungen geschoben wird.

8. Verfahren nach Anspruch 7, **dadurch gekennzeichnet, dass** das Schieben einer Anwendung in eine Warteschlange nur dann erfolgt, wenn dies durch diese Anwendung in ihrer Zugriffsanforderung spezifiziert ist.

9. Verfahren nach einem der vorhergehenden Ansprüche, **dadurch gekennzeichnet, dass** es die folgenden Schritte umfasst:
- für eine vorgegebene Ressource wird ein primäres Niveau von Zugriffsrechten einer Anwendung zugewiesen, die als erste einen Zugriff auf diese Ressource angefordert hat;
- anderen Anwendungen, die eine Reservierung der Ressource durchführen, wird ein sekundäres Niveau von Zugriffsrechten zugewiesen, wobei die Zugriffsrechte des sekundären Niveaus derart sind, dass sie sich nicht mit den Zugriffsrechten des primären Niveaus überschneiden.

10. Verfahren nach Anspruch 9, **dadurch gekennzeichnet, dass** die Preemption und gegebenenfalls die Verhandlung nur zugelassen werden, um das Aufgeben eines Zugriffs zu erzwingen, der im Besitz einer Anwendung mit einem primären Zugriffsniveau ist.
